## Europäisches Patentamt
## European Patent Office
## Office européen des brevets

(11) Veröffentlichungsnummer: **0 371 127**
**A1**

# EUROPÄISCHE PATENTANMELDUNG
## veröffentlicht nach Art. 158 Abs. 3
## EPÜ

(21) Anmeldenummer: 87902875.1

(22) Anmeldetag: 27.03.87

(86) Internationale Anmeldenummer:
**PCT/SU87/00041**

(87) Internationale Veröffentlichungsnummer:
**WO 88/07642 (06.10.88 88/22)**

(51) Int. Cl.⁵: **F16H 57/12, F16H 1/32**

(43) Veröffentlichungstag der Anmeldung:
**06.06.90 Patentblatt 90/23**

(84) Benannte Vertragsstaaten:
**AT CH DE GB IT LI SE**

(71) Anmelder: **LENINGRADSKY INSTITUT INFORMATIKI I AVTOMATIZATSII AKIDEMI NAUK SSSR**
**14 Linia, 39**
**Leningrad, 199178(SU)**

(72) Erfinder: **BOR-RAMENSKY, Arnold Evgenievich**
**ul. Ryadovaya, 34-1**
**pos. Olgino Leningrad, 191000(SU)**
Erfinder: **KUZNETSOV, Valery Nikolaevich**
**ul. Volkovskaya, 33 Leningradskaya obl.,**
**188710**
**Vsevolozhsk-1(SU)**
Erfinder: **KUKIN, Nikolai Ivanovich**
**pr. Khudozhnikov, 29-1-82**
**Leningrad, 194295(SU)**
Erfinder: **KUDRYASHOVA, Svetlana Vladimirovna**
**pr. Nastavnikov, 15-3-51**
**Leningrad, 195298(SU)**
Erfinder: **IVANOV, Vladimir Nikolaevich**
**ul. Sotsialisticheskaya, 15-17**
**Leningrad, 191126(SU)**
Erfinder: **SKALNOV, Vladimir Konstantinovich**
**ul. Bela-Kuna, 26-5-61**
**Leningrad, 196236(SU)**

(74) Vertreter: **Nix, Frank Arnold, Dr.**
**Kröckelbergstrasse 15**
**D-6200 Wiesbaden(DE)**

(54) **PRÄZISIONSPLANETENGETRIEBE.**

(57) Präzessionsplanetengetriebe, enthaltend ein Gehäuse (1), in dem ein Kegelrad (4), das mit einer

Abtriebswelle (3) verbunden ist und mit einem im Gehäuse (1) schaukelbewegbar angeordneten Satelliten (5) im Eingriff steht, sowie ein Steg untergebracht ist, der an einer Eingangswelle (2) angebracht und in Form einer Buchse (7) und eines mit diesem starr verbundenen, an seinem freien Ende eine den Satellit (5) an das Kegelrad (4) andrückende Rolle (II) tragenden Mitnehmers (9) ausgebildet ist, dadurch gekennzeichnet, daß in der Diametralebene des Satelliten (5) in einem Winkel von weniger als 180° zum ersten Mitnehmer (9) ein zweiter Mitnehmer (10) mit einer Rolle (12) symmetrisch angeordnet ist und daß die Buchse (7) in Achsrichtung abgefedert ist.

FIG.1

# PRÄZESSIONSPLANETENGETRIEBE

## Gebiet der Technik

Die vorliegende Erfindung bezieht sich auf den Maschinen- und Gerätebau und betrifft genauer Präzessionsplanetengetriebe, die in kinematischen und Kraftübertragungsmechanismen und insbesondere als Untersetzungsgetriebe in elektromechanischen Baugruppen automatischer Antriebssysteme zur Anwendung kommen.

## Zugrundeliegender Stand der Technik

Bei den bekannten Präzessionsplanetengetrieben erfolgt die Verschiebung des Eingriffsgebiets der Kegelräder wellenartig und kommt infolge der Präzessionsbewegung eines der Kegelräder (des Satelliten) zustande. Aus diesem Grunde werden diese Getriebe in einer Reihe von Quellen als Wellenradgetriebe mit starren Gliedern bezeichnet und als Weiterentwicklung von Wellenradgetrieben mit biegsamen Gliedern betrachtet.

Es sind Präzessionsplanetengetriebe (SU,A,343095) bekannt, die Kegelräder mit sich schneidenden Achsen umfassen, deren eines eine Präzessionsbewegung ausführt und vermittels einer Aufhängeeinrichtung gegen die Eigenrotation gesichert wird.

Bei den erwähnten Getrieben sind die Kegelräder in der Paarung derart befestigt, daß sie (jedes im einzelnen) im Raum statisch bestimmbar sind, während der Berührungspunkt in der Verzahnung das gesamte Getriebe statisch unbestimmbar macht. Infolge dessen tritt in der Verzahnung wegen der Abnutzung der Zähne (oder bei einem nicht genauen Zusammenbau) Luft vom Typ Flankenspiel auf.

Es ist ein weiteres Planetenradgetriebe bekannt, das ein Gehäuse, eine an der Antriebswelle in einem Winkel zur Drehachse der Abtriebswelle befestigte Andruckscheibe mit Kugeln, ein bewegliches, auf einer Kugellagerung befestigtes, die Präzessionsbewegung ausführendes Zahnrad (Satellit), welches mittels eines in einer Führungsnut des Gehäuses gleitenden zylindrischen Bolzens gegen die Eigenrotation gesichert wird, sowie ein an der Abtriebswelle befestigtes und mit dem Satellit kämmendes Kegelrad enthält.

Um die Wirkungsweise dieses Getriebes bes-

ser zu verstehen, wird dessen vereinfachte Ausführung beschrieben, wo an Stelle der Scheibe mit Kugeln ein Steg mit einer Andruckrolle zum Einsatz kommt, die eine Berührungsstelle mit dem präzessierenden Zahnrad hat. Da er auf der Kugellagerung befestigt ist, verliert der Satellit in diesem Fall drei Bewegungsfreiheitsgrade. Der ihn in Bewegung setzende Steg mit Rollen beraubt ihn zwei weiterer Freiheitsgrade, während der Haltebolzen ihn noch eines Freiheitsgrades (der Eigenrotation) beraubt. Dem in Betracht stehenden Satelliten sind also sechs Freiheitsgrade genommen, wodurch er als im Raum statisch bestimmbar bezeichnet werden kann. Jedoch ist auf den Satellit noch eine Bindung seitens des an der Abtriebswelle befestigten Kegelrades im Berührungspunkt der Verzahnung auferlegt. Diese Bindung ist überflüssig und macht das gesamte System statisch unbestimmbar.

Der besagte Effekt verursacht zwangsläufig wegen der Zahnabnutzung den Auftritt einer Luft vom Typ Flankenspiel, sogar wenn das Spiel in der Verzahnung beim Zusammenbau völlig ausgeschlossen ist. Dies führt zum Genauigkeitsverlust und zur Beschränkung der Sollbetriebszeit des Getriebes.

Bei der Ausgangsausbildung ist der Steg in Form einer Scheibe mit Kugeln ausgebildet. Und gerade dadurch, daß der Steg an der Welle starr befestigt und der Mittelpunkt des präzessierenden Zahnrades auf der Kugellagerung festgehalten ist, ist die Lage dieses Zahnrades unstabil. Diese Unstabilität drückt sich in der Mehrdeutigkeit der Lage des präzessierenden Zahnrades in bezug auf die Lage der Andruckrolle aus, weshalb eine Luft zwischen dem Zahnrad und dem Steg entsteht. Diese Luft führt gemeinsam mit der Luft vom Typ Flankenspiel zur ungenauen Arbeit des Getriebes und beschränkt seine Lebensdauer .

Ziel der vorliegenden Erfindung ist es, die genannten Nachteile der obenbeschriebenen Vorrichtungen zu beheben.

<u>Offenbarung der Erfindung</u>

Der Erfindung liegt die Aufgabe zugrunde, ein Präzessionsplanetengetriebe zu schaffen, bei dem der Steg derart ausgebildet ist, daß der Auftritt einer Luft, darunter auch der Luft vom Typ Flankenspiel, ausgeschlossen wird und somit die Genauigkeit und die Betriebsdauer des Getriebes vergrößert werden sowie das Getriebe als Kraftübertragungsgetriebe eingesetzt werden kann.

Diese Aufgabe wird dadurch gelöst, daß bei dem Präzessionsplanetengetriebe, enthaltend ein Gehäuse, in dem ein Kegelrad, das mit einer Abtriebswelle verbunden ist und mit einem im Gehäuse schaukelbewegbar angeordneten Satelliten im Eingriff steht, sowie ein Steg untergebracht ist, der an einer Eingangswelle angebracht und in Form einer Buchse und eines damit starr verbundenen, an seinem freien Ende eine den Satelliten an das Kegelrad andrückende Rolle tragenden Mitnehmers ausgebildet ist, erfindungsgemäß in der Diametralebene des Satelliten in einem Winkel von weniger als 180° zum ersten Mitnehmer ein zweiter Mitnehmer mit einer Rolle symmetrisch angeordnet ist und die Buchse in Achsrichtung abgefedert ist.

Durch eine solche Ausführung der Vorrichtung wird die wegen der Zahnabnutzung und der Zusammenbaufehler auftretende Luft vom Typ Flankenspiel sowie die bei erheblichen Belastungen entstehende elastische Luft ausgeschlossen und hohe Genauigkeit sowie eine lange Lebensdauer der Vorrichtung bei ihrem Einsatz in kinematischen und Kraftübertragungsgetrieben sichergestellt.

Das Wesen der Erfindung besteht darin, daß durch die Abfederung des Steges eine spielfreie Berührung des Satelliten mit dem an der Abtriebswelle sitzenden Gegenzahnrad gewährleistet und die Luft vom Typ Flankenspiel deshalb grundsätzlich ausgeschlossen wird.

Durch Vorhandensein am Steg von gerade zwei (und nur zwei) Rollen wird die Lage des Satelliten im Raum mit drei Punkten eindeutig bestimmt, und zwar mit zwei Berührungspunkten der Rollen $A_1$ und $A_2$ und einem scheinbaren Punkt als Pol der Präzessionsbewegung des Satelliten Die Eindeutigkeit bleibt in allen Fällen erhalten, wenn der Winkel zwischen den Mitnehmern mit Rollen kleiner als 180° ist und die Auflagepunkte nicht in einer Geraden liegen. Dieser Umstand macht die Bewegung des Satelliten bei · feststehendem Steg unmöglich und schließt die elastische Luft, wenn im Getriebe eine elastische Bindung, d.h. eine Feder, vorhanden ist, aus.

Die obenerwähnte, in einer Reihe von Quellen vertretene Auffassung, daß die ähnlichen Getriebe Wellengetriebe mit starren Gliedern darstellen, die der Weiterentwicklung von Wellengetrieben mit biegsamen Gliedern dienen, wird damit begründet, daß die Reserven der weiteren Vervollkommnung üblicher (d.h. Nichtwellen-) Radgetriebe in bezug auf ihre Genauigkeit im Rahmen der neuzeitlichen Fertigungsmöglichkeiten praktisch erschöpft sind. Das Ziel einer solchen Weiterentwicklung sei es, den Hauptnachteil der Wellengetriebe mit biegsamen Gliedern, nämlich die begrenzte Lebensdauer , unter möglichst geringer Herabsetzung der Genauigkeitsforderungen zu beseitigen.

Die angemeldete Vorrichtung besitzt sämtliche Vorteile der Wellengetriebe mit biegsamen Gliedern und läßt aufgrund einer um zwei bis drei Größenordnungen höheren Lebensdauer schnellaufende Radgetriebe für Kleinantriebe mit einer großen kinematischen Genauigkeit und Stoßfreiheit des Betriebs ohne das für einen toten Gang der Bewegungsübertragung kennzeichnende Flankenspiels schaffen.

Dank der Beseitigung der elastischen Luft wird das Getriebe als Kraftübertragungsgetriebe eingesetzt und es läßt sich nicht nur in Steuerungssystemen und in der Gerätetechnik, sondern auch in Triebwerken verschiedener Maschinenbaubranchen verwenden.

## Kurze Beschreibung der Zeichnungen

Im nachfolgenden wird die vorliegende Erfindung an Hand einer ausführlichen Beschreibung und beiliegender Zeichnungen näher erläutert. In den Zeichnungen zeigt

Fig. 1 das erfindungsgemäße Präzessionsplanetengetriebe;

Fig. 2 den Schnitt nach Linie II – II der Fig. I.

## Beste Ausführungsform der Erfindung

Das Präzessionsplanetengetriebe (Fig. I) enthält ein Gehäuse I, eine Eingangswelle 2 und eine Abtriebswelle 3, welche koaxial zueinander liegen, ein Kegelrad 4, das mit der Abtriebswelle 3 verbunden ist und mit einem Satelliten 5 im Eingriff steht, der im Gehäuse I, beispielsweise mit Hilfe einer kardanischen Aufhängung 6, schaukelbewegbar angeordnet ist. Weiterhin ist ein Steg vorhanden, der in Form einer durch eine Feder 8 in Achsrichtung abgefederten Buchse 7 und von mit der Buchse 7 starr verbundenen Mitnehmern 9 und IO ausgebildet ist, wobei die Mitnehmer 9 und IO an ihrem freien Ende Rollen II bzw. I2 aufweisen.

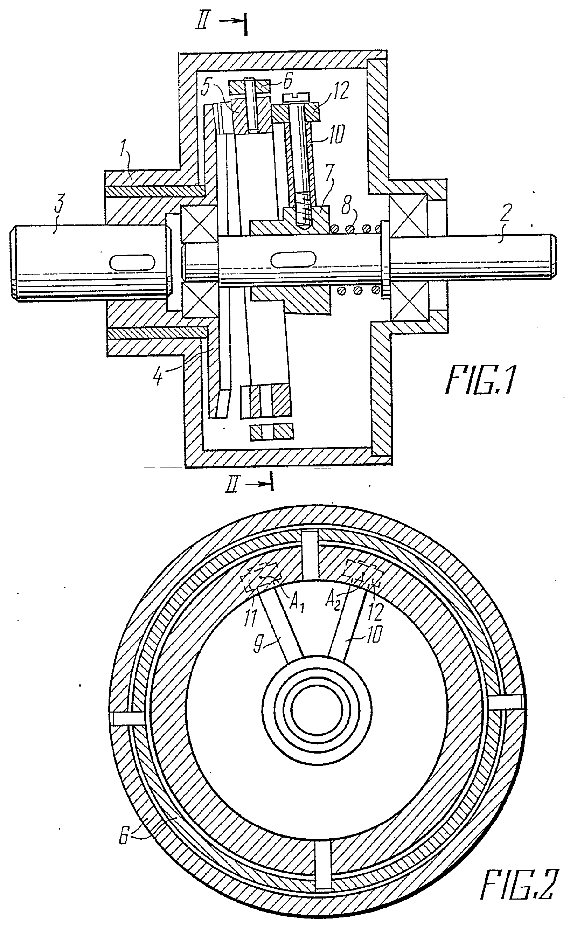

Die Mitnehmer 9 und 10 (Fig. 2) sind in der Diametralebene des Satelliten 5 symmetrisch gelegen. Der Mitnehmer IO ist in einem Winkel von weniger als 180° zum ersten Mitnehmer 9 angeordnet.

Das Präzessionsplanetengetriebe arbeitet wie folgt.

Das an die Eingangswelle 2 angelegte äußere Moment wird auf den Steg übertragen, der über die Rollen II und I2 auf den Satellit 5 einwirkt und diesen veranlaßt, in spielfreie Berührung mit dem Kegelrad 4 zu kommen und somit die Luft vom Typ Flankenspiel zu beseitigen.

Dank den Rollen II und I2 hat der Satellit 5 drei Auflagepunkte, u.zw. zwei Berührungspunkte $A_I$ und $A_2$ der Rollen und einen scheinbaren Punkt, der der Pol des präzessierenden Satelliten 5 ist, und diese Punkte halten den Satellit 5 bei dem Abwälzen des letzteren auf dem Kegelrad 4 fest in eindeutiger Winkellage in bezug auf die Achse seiner augenblicklichen Drehung in Abhängigkeit von der Winkellage des Steges und folglich auch der Eingangswelle 2, wodurch das Auftreten elastischen Spiels ausgeschlossen wird. Der Satellit 5 und das Kegelrad 4 weisen unterschiedliche Zähnezahlen auf, und deshalb wird sich das Kegelrad 4 bei einer vollen Umdrehung des Steges in bezug auf den Satellit 5 um einen Winkel versetzen, der dem Unterschied in den Zähnezahlen dieser Räder entspricht; da aber der Satellit 5 gegen die Eigenrotation mittels der kardanischen Aufhängung 6 gesichert ist, so drehen sich das Kegelrad 4 und die Abtriebswelle 3, wobei die letztere eine bezüglich der Eingangswelle 2 untersetzte Umdrehung erhält.

## Gewerbliche Anwendbarkeit

Das erfindungsgemäße Präzessionsplanetengetriebe läßt das Kraftmoment vom Antrieb auf den Stellmechanismus spielfrei mit einer hohen Untersetzung in einer Stufe (bis 300) übertragen. Am zweckmäßigsten werden diese Getriebe ebenfalls in Mechanismen automatischer Nachführsysteme eingesetzt, doch sind sie auch in Kraftübertragungsgetrieben verschiedener Maschinenbaubereiche anwendbar.

FIG.1

FIG.2

# INTERNATIONAL SEARCH REPORT

International Application No PCT/SU 87/00041

## I. CLASSIFICATION OF SUBJECT MATTER (if several classification symbols apply, indicate all) 6

According to International Patent Classification (IPC) or to both National Classification and IPC

IPC⁴    F 16 H 57/12, 1/32

## II. FIELDS SEARCHED

| Minimum Documentation Searched 7 | |
|---|---|
| Classification System | Classification Symbols |
| IPC⁴ | F 16 H 57/12, 1/32 |

Documentation Searched other than Minimum Documentation
to the Extent that such Documents are Included in the Fields Searched 8

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | SU, A1, 205454, (Lehingradskoe optiko-mekhanicheskoe obiedinenie) 10 January 1968 (10.01.68), see the claims | 1 |
| A | SU, A1, 92636, (N.F. Kotov et al.), 31 October 1959 (31.10.59), see the claims | 1 |
| A | US, A, 3258994 (Alex M. Gorfin), 05 July 1966 (05.07.66), see figure 5,11, column 6, lines 1-75, column 7, lines 1-15, column 10 | 1 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 13 November 1987 (13.11.87) | 18 December 1987 (18.12.87) |
| International Searching Authority | Signature of Authorized Officer |
| ISA/SU | |

Form PCT/ISA/210 (second sheet) (January 1985)